Europäisches Patentamt

European Patent Office

Office européen des brevets

(11) Publication number: **0 233 187 B1**

## EUROPEAN PATENT SPECIFICATION

(45) Date of publication of patent specification: **23.10.91**  (51) Int. Cl.⁵: **A47J 37/04, G01F 23/20**

(21) Application number: **86900949.8**

(22) Date of filing: **15.01.86**

(86) International application number:
**PCT/US86/00086**

(87) International publication number:
**WO 87/00410 (29.01.87 87/03)**

Divisional application 89107953.5 filed on
15/01/86.

(54) **PORTABLE GAS GRILL.**

(30) Priority: **26.07.85 US 759531**
**08.08.85 US 763858**

(43) Date of publication of application:
**26.08.87 Bulletin 87/35**

(45) Publication of the grant of the patent:
**23.10.91 Bulletin 91/43**

(84) Designated Contracting States:
**AT BE CH DE FR GB IT LI LU NL SE**

(56) References cited:

| | |
|---|---|
| FR-A- 832 111 | FR-A- 936 111 |
| GB-A- 143 701 | US-A- 411 576 |
| US-A- 1 133 850 | US-A- 1 224 157 |
| US-A- 1 954 476 | US-A- 1 964 805 |
| US-A- 2 196 280 | US-A- 2 301 140 |
| US-A- 2 447 925 | US-A- 2 541 528 |
| US-A- 2 740 517 | US-A- 2 817 331 |
| US-A- 2 905 077 | US-A- 3 418 921 |
| US-A- 3 474 724 | US-A- 3 545 908 |
| US-A- 3 567 065 | US-A- 3 586 518 |

(73) Proprietor: **WEBER-STEPHEN PRODUCTS CO.**
**200 East Daniels Road**
**Palatine, IL 60067(US)**

(72) Inventor: **LOHMEYER, Charles, W.**
**274 Hickory Lane**
**Barrington, IL 60010(US)**
Inventor: **SCHLOSSER, Erich, J.**
**208 Lakeshore Drive**
**Lindenhurst, IL 60046(US)**
Inventor: **TUCKER, James, E.**
**1049 South Jackson**
**Batavia, IL 60510(US)**
Inventor: **STEPHEN, James, C.**
**15 Regency Drive**
**Arlington Heights, IL 60004(US)**

Rank Xerox (UK) Business Services

US-A- 3 745 303  US-A- 3 794 013
US-A- 3 859 978  US-A- 4 233 890
US-A- 4 245 505  US-A- 4 321 857
US-A- 4 413 515  US-A- 4 485 972

Inventor: **LEJA, Andrzej**
B Dundee Quarter, No. 204
Palatine, IL 60067(US)
Inventor: **BEECHER, John, III**
1154 Chippewa Creek
Carpentersville, IL 60110(US)
Inventor: **SIMPKINS, Ronald, W.**
511 North Stratford
Arlington Heights, IL 60004(US)
Inventor: **PESTKA, Donald, E.**
150 South Walnut
Bensenville, IL 60106(US)

(74) Representative: **Strehl, Schübel-Hopf, Groen-
ing**
**Maximilianstrasse 54 Postfach 22 14 55**
**W-8000 München 22(DE)**

## Description

The present invention relates to a portable gas grill including a cart supporting a housing having a gas burner assembly in the bottom and a food support grid above the gas burner assembly with gas emitting jets.

The portable gas grill of this type is known from US-A 4,245,505. This known gas grill is equipped with a movable platform supporting a bottle for liquefied petroleum gas. A pointer is connected to that platform to move when that platform moves. Adjustable spring means urge that platform to move in a direction which will move that pointer toward an empty position but that adjustable spring means will permit a full bottle to hold that platform in a position wherein that pointer is spaced away from said empty position.

Portable gas grills of the aforementioned type usually have a grid structure above the gas burners that supports a heat-absorbing material, such as lava rock.

One of the problems with this tpye of unit is the fact that any greases dripping from the food being cooked onto the lava rock have a tendency to ignite, producing uncontrolled flare-ups which can ruine the food being cooked. Another problem is the fact that the lava rock or other material collects the grease, which is absorbed into the material and thus becomes rather unsightly.

Various devices have been proposed for preventing the drippings of the food from impinging directly on the hot coals, but none of such devices have been accepted in the marketplace.

Another objection to the use of lava rock or other heat-absorbing material is the length of time required for heating the rock sufficiently for cooking and then subsequently the time required for cooling the lava rock.

It is an object of the present invention to improve portable gas grills of the aforementioned known type to eliminate the need for any lava rock or other similar materials as well as the support grid for the lava rock and that a desired amount of grease and drippings is vaporized to provide smoke for flavoring the food whilst those which are not vaporized are collected in an easily-removable grease collector unit that defines the bottom portion of the cooking chamber. The unit shall also be operable to prevent controlled flare-ups for searing the food.

In order to achieve the aforementioned objects the present invention is characterized by said cart being of generally rectangular configuration and consisting of a plurality of tubular members arranged to define an upper rectangular opening, said housing having first and second opposed pairs of walls defining a chamber having a cover, said chamber having opposed outwardly-directed ledges integral with said first pair of opposed walls, and a plurality of generally V-shaped sear bars supported on said ledges, said sear bars covering said gas burner assembly and adapted to receive and vaporize grease drippings thereon and prevent uncontrolled flare-ups.

According to another aspect of the invention the burner assembly includes first and second alongated burner tubes, each having a flattened end portion with a slot extending from a free end, said housing having a pair of ledges at opposed corners with abutments on upper surfaces received into said slots so that said burner tubes can be assembled in a housing by manipulation of said tubes.

Due to a further improvement of the present invention a removable grease collector unit defining the interior bottom wall for said chamber with said chamber having a lower edge located outside a peripheral rim of said collector unit, that housing having an integral inwardly-directed lip overlapping said peripheral rim to direct grease into said collector unit. Furthermore, said grease collector unit may include inwardly-tapered walls leading to a lower opening, and further including a removable grease collector tray below said opening.

According to a further aspect of the present invention said cover including two end pieces and a center insert with fastener means connecting said center insert to respective end pieces, said fastener means including a bold having an enlarged head with each end piece having an enlarged recess surrounding an opening and in which said bolt has gripping means received into said opening and preventing turning of said bolt in said opening with a nut received on said bolt and rotatable to draw said gripping means into said opening.

In the illustrated embodiment, a second set of sear bars extend transversely to the lower sear grid. While the second sear grid is not necessary for cooking purposes, it has been found that the second sear grip, located slightly above the first sear grid, provides more uniform temperature at the cooking surface. Again, the second set of sear bars may be supported on ledges in the side walls of the chamber and based by positioning elements.

According to a further aspect of the invention the gas grill also includes a tank support means consisting of a scale having a first element supported on said card and a second element movable thereon with biasing means between said elements, and tank clamping means on said second element with anti-friction means on said cart to accommodate vertical movement of said tank on said cart as a function of the weight of said tank.

According to a further aspect of the invention the gas grill has also a third burner unit intermediate said two burners units and a pilot tube interconnecting said two burner units adjacent said flattened portions, said third burner unit having a free end supported on said pilot tube and in communication therewith so that one of said burners may be ignited and the remaining burner units are ignited from said pilot tube. In this case, it is advantageous if the pilot tube is open at opposite ends and that said two burner units have openings receiving said opposite ends, said pilot tube having a projection intermediate opposite ends and said burner unit having a position slot receiving said pilot tube and said projection so that said pilot tube and burner units can be assembled within said housing by manipulation of said tubes without the use of any fastener means.

A separate removable burner unit may also supported on said side members outside said housing in certain instances, the separate burner unit may be eliminated and a work surface provided the space between the side members. The work surfaces are all supported by ledges on the side member so that they can easely be moved for cleaning.

Finally, the housing may include a cover hinged to an upper edge of one wall, said cover having a removable thermometer supported thereon, said thermometer including a piercing projection portion extending through said cover to sense the internal temperature of said housing, said thermometer being removable from said cover and insertable into food being cooked to sense the internal temperature of the food.

Brief Description of Several Views of Drawings

FIG. 1 is a perspective view of a gas grill constructed in accordance with the teachings of the present invention;

FIG. 2 is a fragmentary cross-sectional view, as viewed along line 2-2 of FIG. 1, showing the simplified interconnection between tubular members that form the cart;

FIG. 3 is a fragmentary perspective view of the firebox with the cover in a closed position;

FIG. 3A is an enlarged cross section, as viewed along line 3-3 of FIG. 3;

FIG. 4 is a cross-sectional view, as viewed along line 4-4 of FIG. 3;

FIG. 5 is an end view of the sear bar that is used to define a sear grid within the chamber;

FIG. 6 is a cross-sectional view, as viewed along line 6-6 of FIG. 4;

FIG. 7 is an exploded view of the sear grid arrangement within the chamber;

FIG. 8 is a fragmentary top perspective view showing details of the burner assembly;

FIG. 9 is a fragmentary perspective view of the scale which supports the fuel tank;

FIG. 10 is a cross-sectional, as viewed along line 10-10 of FIG. 9;

FIG. 11 is a fragmentary cross-sectional view, as viewed along line 11-11 of FIG. 10.

FIG. 12 is a side view of the pivoted working surface;

FIG. 13 is a bottom view of the view of the working surface, as viewed along line 13-13 of FIG. 12; and,

FIG. 14 is a cross-sectional view, as viewed along line 14-14 of FIG. 13.

Detailed Description

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

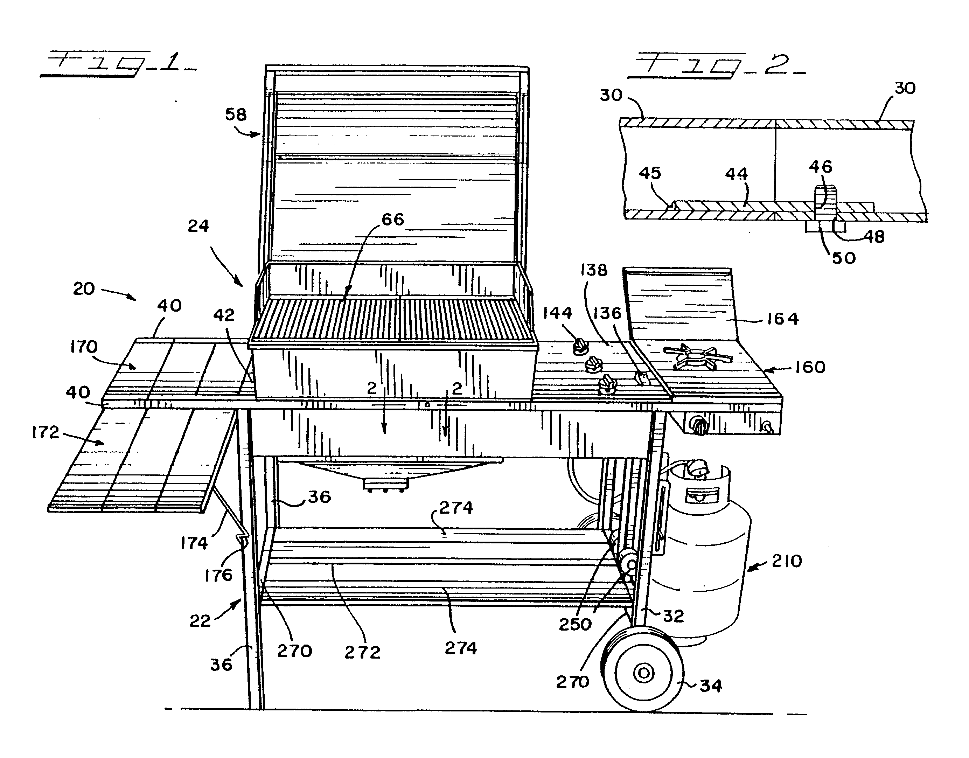

FIG. 1 of the drawings shows a gas grill generally designated by reference numeral 20, constructed in accordance with the teachings of the present invention. The grill 20 consists of a portable cart 22 and a cooking vessel or chamber 24.

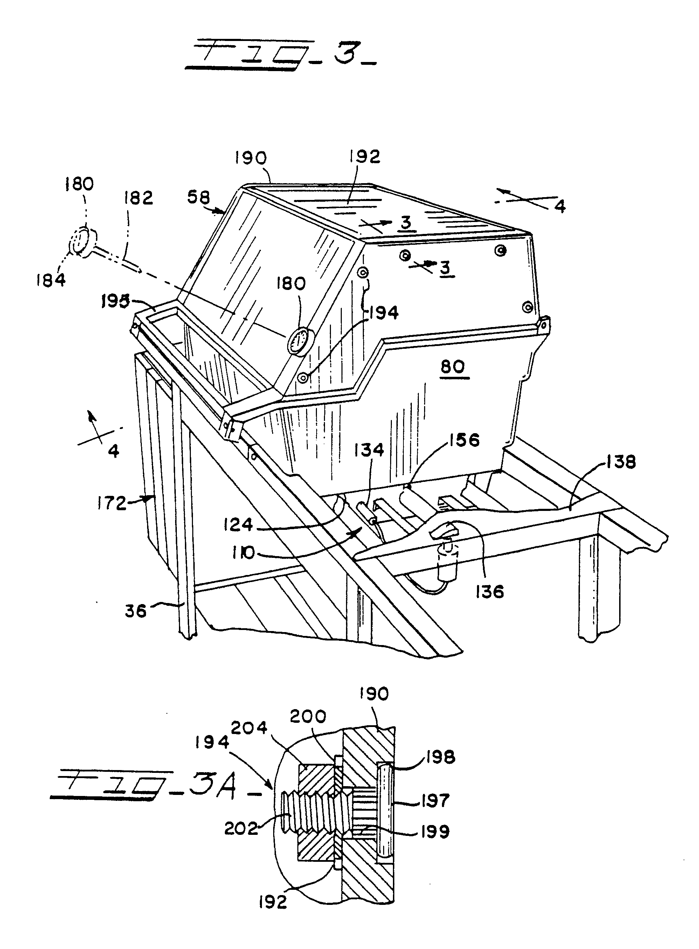

The cart 22 is preferably formed from a plurality of hollow rectangular tubular members 30 (FIG. 2), including a pair of rear vertical posts 32 that define legs supported on wheels 34 at the lower end thereof. The second pair of vertical posts 36 extend upwardly and define the remaining two legs. The upper portion of the cart includes a pair of spaced parallel side members 40 which are interconnected by one or more cross-members 42. According to one aspect of the invention, the side members 40 are defined by at least two end-to-end tubular members 30 that are interconnected in a unique fashion, shown in FIG. 2, without the use of any special tools or complicated fasteners.

As illustrated in FIG. 2, one tubular member 30 has a plate-like extension 44 extending from the free end and received into the adjacent open end of an adjacent tubular member 30. The extension has a width approximately equal to the space between the walls of tubular members 30 and is welded at one end 45 to one tubular member to hold the tubular members in end-to-end relation. The plate-like extension 44 has a threaded opening 46, aligned with an opening 48 in the side member, which receives a threaded fastener 50 so that the two tubular members can easily be disconnected and the cart assembly can be broken-down into smaller pieces for shipment and storage. Any number of such pieces of tubing may be utilized in assembling the cart 22 and the upper side members 40 define a generally rectangular opening for receiving the cooking vessel 24.

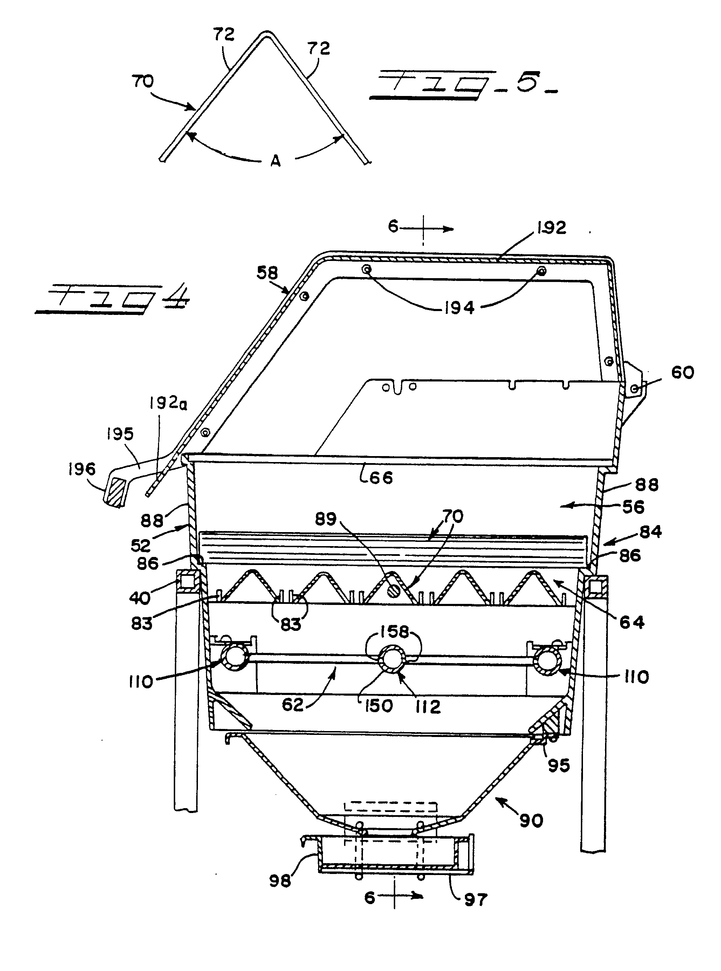

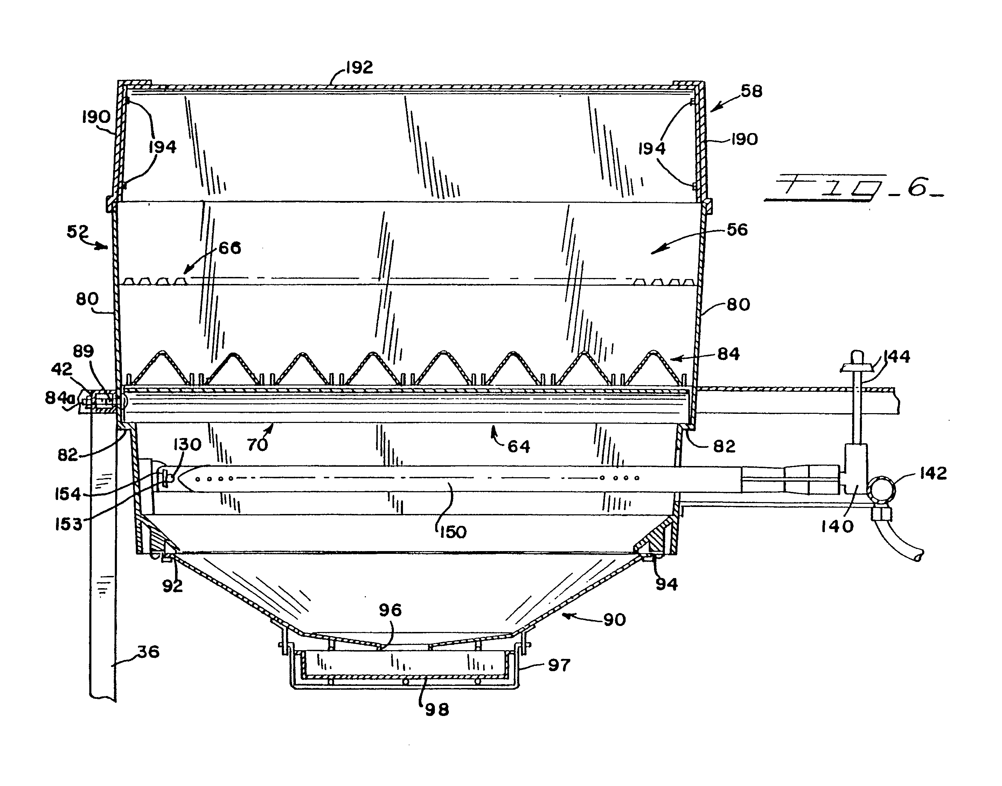

The cooking vessel or housing 24 consists of a lower housing or portion 52 (FIG. 4) defining a chamber 56 and having a cover 58 secured by a hinge 60 to one upper edge of one of the sidewalls that form the chamber 56. The lower chamber has a burner assembly 62 located in a lower portion thereof and a sear grid arrangement 64, located above the burner assembly 62 and a cooking grid 66.

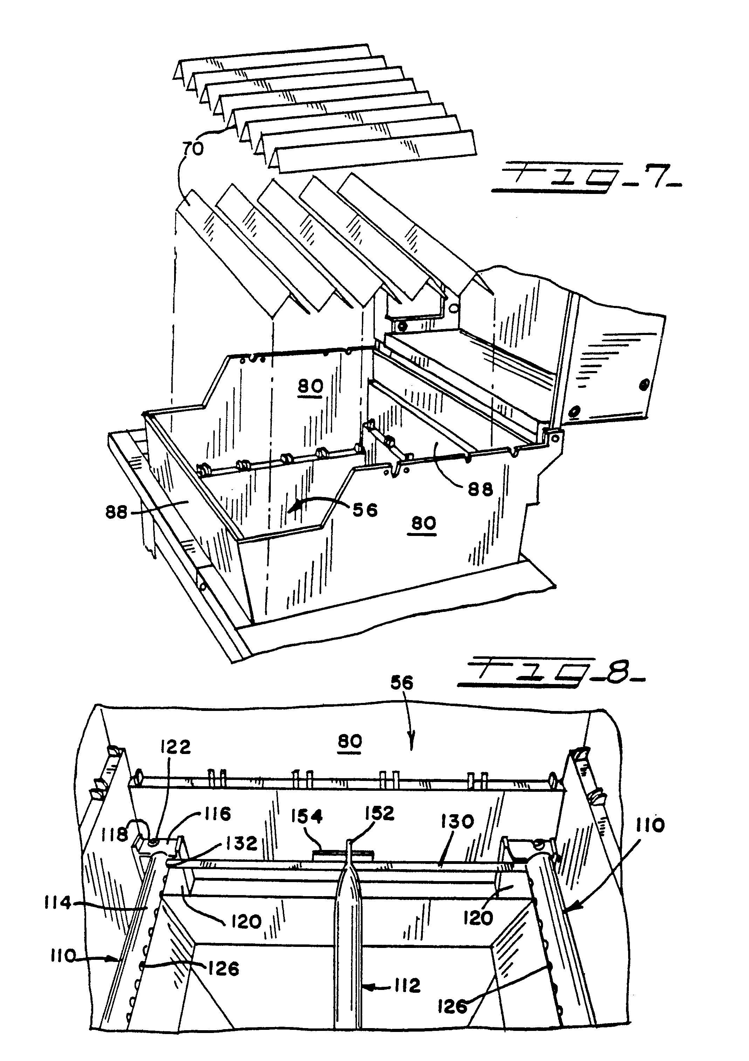

According to the primary aspect of the present invention, the sear grid 64 is designed to replace the conventional heat-absorbing lava rock or equivalent materials and its supporting grid, and functions in a more acceptable manner than any material heretofore utilized. The sear grid 64 includes a plurality of V-shaped sear bars (FIG. 5), generally designated by reference numeral 70, and each sear bar 70 consists of a pair of inclined walls 72 that define an included angle A to produce the desired function of the sear bars. The included angle A is preferably less than 90°, and in the illustrated embodiment the angle is illustrated to be about 75°, but could be about 50° to about 80°.

The inverted V-shaped sear bar 70 is preferably formed from a metal material having good heat conducting characteristics, such as cold-rolled steel, which has a porcelain enamel coating thereon. The two inclined walls 72 define smooth outer inclined flat surfaces that will receive dripping from food, such as meats, being cooked and cause the drippings to flow along the inclined surfaces.

Because of the inverted V-shaped nature of the sear bars, and the fact that they are formed of metal which has good heat conduction, the heat from the burner assembly 62 will be trapped between the sidewalls and will quickly heat the entire sear bar to a temperature sufficient for causing a desired amount of grease received on the outer surfaces of the sidewalls 72 to vaporize and the remaining grease will pass through the sear grid 64 into a lower grease collector unit. In the preferred embodiment, the sear grid 64 is formed by five identically-constructed sear bars 70 that are supported in a predetermined position within the lower chamber 56 with small narrow spaces between adjacent bars that allow the heat to move upwardly into the upper portion of the lower chamber which supports the cooking grill or grid 66.

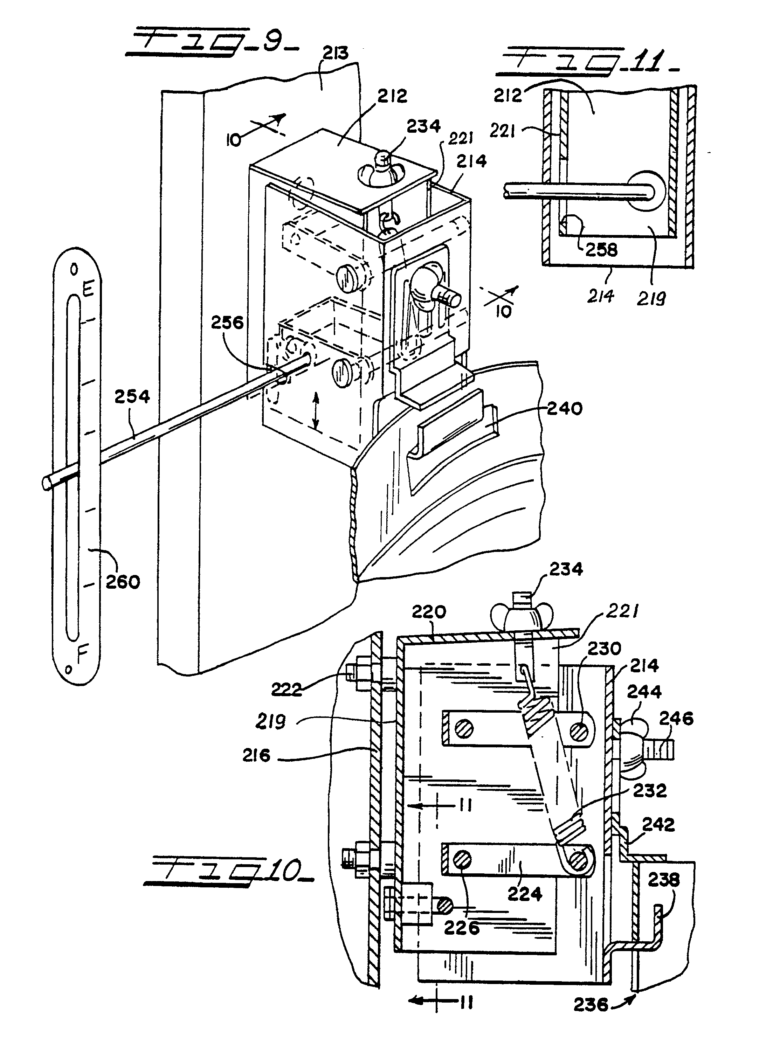

According to one aspect of the present invention, the sear bars are supported within the chamber such that there is no need for any fasteners, and the sear bars may be merely dropped into position. As illustrated in FIG. 6, the front and rear walls 80 of the housing each have an offset portion 82 that define upwardly-facing ledges within the chamber 56. Thus, the sear bars 70 may readily be dropped into position as shown in FIGS. 4 and 5 and the opposite ends will rest on the ledges 82. The ledges 82 have positioning elements 83 for defining a predetermined position between respective sear bars, as is shown in FIG. 4.

While not necessary for the practice of this aspect of the invention, the grill includes a second set of sear bars 70 identical to the first set, except for length, that define a second sear grid 84. Again, the sear bars 70 are supported on ledges defined by offsets 86 in the sidewalls 88 of the chamber 56. The ledges 86 again have positioning elements 83 so that the sear bars (FIG. 6) can be dropped into position without the use of any fasteners.

It has been found that the second sear grid 84, in conjunction with the first sear grid 64, will provide more uniform heat for the cooking process then was heretofore possible in utilizing lava rock or other types of heat-absorbing materials.

With the arrangement so far described, any grease or drippings off of the food being cooked will first hit the outwardly-inclined surfaces of the upper sear grid 84, which are hot and a desired amount of grease and drippings will vaporize while on the sear bars to provide the desired smoke flavoring for the food being cooked. Since each of the burner tubes of the burner assembly 62 (to be described later) is located directly below one inverted V-shaped sear bar, there is no chance of any grease being deposited directly onto the hot burners and any grease passing through the sear grids will be collected in the lower portion of chamber 56.

In this respect, the lower portion of the chamber 56 is defined by a grease collector unit 90. The grease collector unit 90 consists of a tapered tray that has an outwardly-directed lip 92 on the peripheral edge thereof and this outwardly-directed lip is supported on inwardly-directed L-shaped brackets 94 that define slide guides for removal of the tray . It should be noted that the walls of the housing extend below and outside of brackets 94 so that any water will be directed away from the inside of the tray. The collector tray or unit 90 has all of its walls tapering inwardly and downwardly, as shown in FIGS. 5 and 6, so that all of the grease drippings will be directed to a central opening 96 in the center of the lowermost portion of the tray 90.

It should be noted that the lower housing 52 defining chamber 56 is formed as a one-piece casting to eliminate any seams on the inner surface. The housing has an inwardly-directed lip 95 that defines a continuous uninterrupted surface which overlaps the peripheral edge of the grease collector unit 90 to insure that no grease escapes from the housing. It should be noted that the bracket 94 is located below the inwardly-directed lip 95, which is an integral part of the cast housing 52.

A further smaller rectangular tray or collector 98 is located below the opening 96 and again is removably supported on a wire assembly 97. Thus, grease collected by the collector unit 90 will flow into the lower centermost opening 96 and into the small removable tray or cup 98, which can easily be removed and the grease discarded. Alternatively, if a large accumulation of grease should be caught on the tapered walls of the large collector unit 90, the entire unit can be removed and easily be cleaned and reinserted. The small removable tray collects most of the grease received into the collector and is spaced substantially below the burner units to eliminate any possibility of ignition.

The collector unit 90 may also be used as a broiler by providing a grill, such as a part of the two-piece grill 66.

According to one aspect of the invention, the lower housing 52 is supported on the cart 22 and is suspended on the side members 40. As shown in FIG. 4, the offsets 86 in the sidewalls 88 that form the ledges are positioned such that these ledges will rest on top of the side members 40 to support the entire cooking vessel within the rectangular opening defined by the side members 40. If desired, a single fastener 89 may be utilize for securing the entire cooking vessel to the cart, and this fastener is shown in FIG. 6 extending through the one end wall 80 and the cross member 82 and receives a nut 84a.

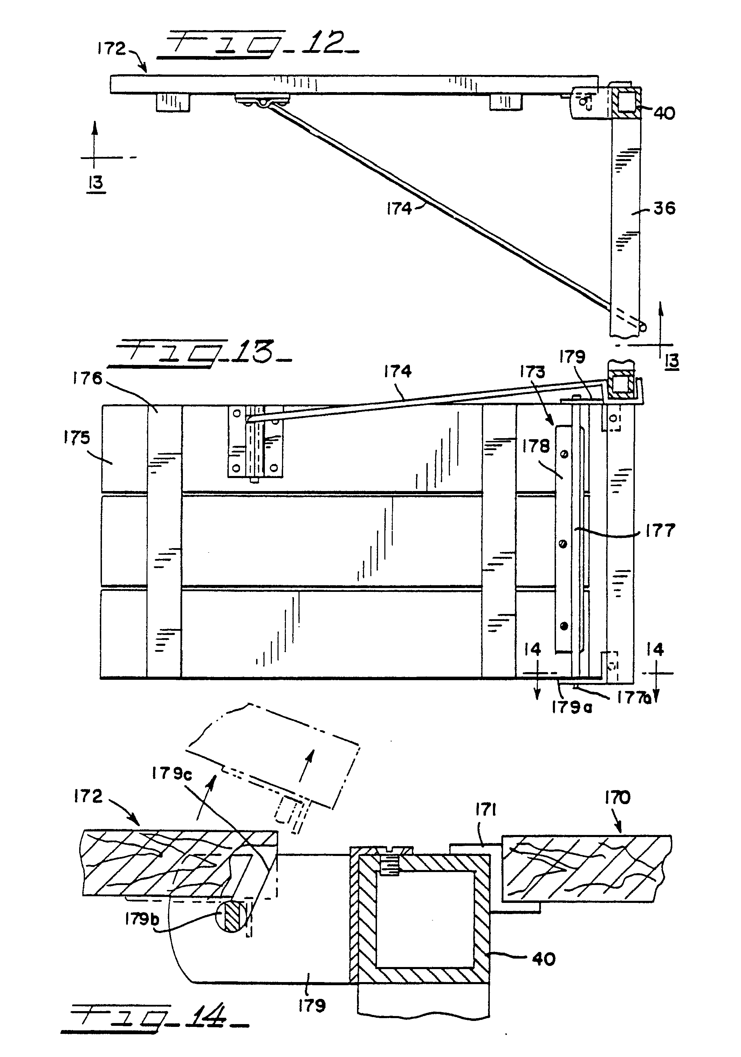

According to one further aspect of the invention, the burner assembly 62 is again structurally engineered such that the entire assembly can be assembled by a purchaser without the use of any special tools and in a simplified manner. Thus, an illustrated in FIGS. 4 and 8, the burner assembly 62 consists of a pair of outer burner units 110 and an intermediate burner unit 112. The outer burner units 110 are identical in construction and are interchangeable with each other. The outer burner units each consist of an elongated, preferably circular, tube 114 that has a flattened connecting portion 116 at the outer free end thereof. The flat connecting portion 116 has a generally U-shaped slot 118 extending from the free edge thereof and, as shown in FIG. 8, the slot is offset from the axis of the tube 114, for a purpose that will be described later. The lower housing 52 has a pair of corner support members 120 positioned in the corners adjacent the one end wall 80, and these corner support members 120 define an upwardly-directed supporting surface that has an upwardly-extending abutment or projection 122. The abutment or projection is preferably in the form of a threaded fastener or screw that has an enlarged head. The projection could also be formed integrally with the support member 120.

Thus, the burner unit 110 can easily be assembled into the chamber merely by insertion of the end of the tube through an opening 124 in the opposite end wall (see FIG. 3) and the flattened portion 116 can be slid along the upper surface of the corner support member 120, with the threaded fastener 122 received into the slot 118. The burner unit 110 can then be secured by the fastener 122 at one end, while the opposite end rests on the edge of the opening 124 defined in the other end wall 80. Since the projection and slot are offset from the axis of the tube 114, there is no possibility of improper assembly of the two outer burner units 110. These burner units 110 have a row of small apertures 126 that are positioned to be directed inwardly in the assembled condition, as shown in FIG. 8 and are in a common plane with flattened portion 116, so that any gas will be directed to the center of the lower chamber.

A third burner unit 112 is preferably located intermediate the first and second burner units and again is easily assembled without the use of any tools. For this purpose, an open-ended connecting tube or pilot tube 130 extends between the two burner units 110 and has opposite ends received into openings 132 located in the tubes 114. The opposite ends of the connecting or pilot tube 130, which is substantially smaller in diameter than the tubes 114, has a plurality of apertures (not shown) so that any gas received into the first burner unit, which is then ignited, will travel through the pilot tube 130 towards the second burner unit 110.

Thus, the first burner unit may be ignited by an electric ignitor 134 (FIG. 3), controlled by a switch 136 that is located on the control panel 138 for all of the burner units. The inner ends of the burner units 110 each having a control valve 140 located between a gas source tube 142 and the end of the burner tube 114. A control knob 144 extends from the control valve and is located above the control panel.

The third burner unit is of slightly different construction and is positioned approximately equidistant between the outer burner units 110. The third burner unit 112 again consists of a generally circular tube 150 that has a flattened portion 152 on the outer free end thereof. The flattened portion 152 has a slot 153 (FIG. 6) for receiving the tube 130 and a small projection or plate 154 welded to the surface of the tube 130 so that the intermediate burner unit is accurately positioned with respect to the remainder of the burner assembly. The center burner tube 150 extends through an intermediate opening 156 in the other end wall 80 (FIG. 3). The circular tube 150 has two sets of diametrically-opposed apertures 158 (FIG. 4). The intermediate unit 112 again has a valve 140 and control knob 144 as shown in FIG. 6.

With the construction of the burner assembly 62, as described above, all of the burner assembly 62 can be installed without the aid of any tools. In assembling the burner assembly, the center burner unit 112 is inserted through the intermediate opening 156 and tube 130 is moved through the slot 153 in the end of the flattened end portion 152. One end of the tube 130 is then inserted into the opening 132 in one of the burner units 110 after it has been inserted through an opening 124 and the opposite end is then moved into the opening 132 of the second unit 110. Thus, the inner free ends of the burner units are interconnected by the single connecting tube 130 which defines the support for the inner end of the intermediate burner 112. The two outer burner units are then manipulated such that the slots 118 receive the projections 122 and the three burner units are then in the position illustrated in FIG. 8 and can be held in such position by tightening the projections 122. In the assembled condition, the inner end of the burner tubes rest on the lower edges of the respective openings.

The burner assembly 62 can be ignited in sequential order, first by igniting the front burner unit 110 with the ignitor 134 by depressing of the switch 136 on control panel 138. A hole may be provided in the lower chamber for manual ignition, if desired. After the first burner unit is ignited, the second outer burner unit 110 merely needs to have gas supplied thereto and the cross-pilot tube 130 will provide the ignition for the gas in the second burner unit. Likewise, the supply of gas to the intermediate burner unit will automatically be ignited by the flames from the apertured cross-tube 130.

While the burner units have been shown as linear tubes, other configurations could be used so long as the sear bars have the same configuration as the elongated burner tubes. For example, the burner tubes could be U-shaped in plan view.

According to one further aspect of the invention, the gas grill 20 of the present invention incorporates a separate burner unit 160 which is supported on the side members 40 of the cart 22 adjacent one end thereof. The separate burner unit 160 consists of a gas burner 162 that may normally be closed by a cover 164 hinged along one edge to the burner assembly. The separate burner assembly 160 rests on and is suspended between the side members 40 and can easily be moved to a different location if desired. Alternatively, the second burner unit 160 may be eliminated and a work surface may be provided.

The working surface could be of the type shown in FIG. 1 as being a working board 170 that is supported on the side members 40 by brackets 171 (FIG. 14) adjacent the cooking vessel 24. A further working board 172 may also be provided which is movable between stored and usable positions respectively shown in FIGS. 3 and 1.

The working board 172 (FIG. 12) is preferably connected along one edge by a hinge 173 to the side member 40 and is supported in the usable position, extending generally horizontally as shown in FIG. 1, by a support rod 174. A support rod 174 is pivotally supported on the lower surface of the board 172 and has an offset outer free end received around the leg 36. The same offset portion may be received in the other leg 36 so that the working board 172 remains in a fixed stored position when not in use.

The working board may be formed from a plurality of slats 175 connected by cross-members 176. The hinge 173 includes a rod 177 connected by a bracket 178 to the working board 170. The rod has a flattened portion 177a on one end and is supported on a pair of brackets 179 and 179a. The brackets have openings 179b and one opening has a slot 179c extending to one edge for receiving the flattened portion. Thus, the working board can easily be removed for cleaning.

According to a further aspect of this invention, the grill 20 incorporates a removable thermometer 180 in the cover 58, which can be utilized for sensing the internal temperature of the cooking chamber or, alternatively, the internal temperature of the food or meat that is being cooked. Thus, thermometer 180 includes a conventional piercing portion 182 extending from an indicator dial 184. In normal operation, the portion 182 is received through an opening (not shown) in the front portion of cover 58 to be readily visible for viewing by the operator. When it is desired to sense the temperature of meat that is being cooked on the grill, the thermometer is merely removed and inserted into the food product, where the temperature is then sensed as a function of the meat temperature rather than the chamber temperature.

According to a further aspect of the invention, the cover 58 consists of two cast end caps 190 and an insert 192 formed of non-metallic material, which are interconnected through the use of special flush-headed bolts 194. The end caps 190 have extensions 195 with a handle 196 secured to the extensions.

As illustrated in FIG. 3A, the bolt 194 has an enlarged head 197 received with an enlarged recess 198 surrounding an opening 199 in end piece 190. The bolt 194 has a serrated portion 200 that provides a friction grip in the opening 199. The bolt 194 also has a threaded portion 202 received through an opening in the insert 192 and receives a nut 204. Thus, the bolt 194 can be inserted into the opening 199 and nut 204 can be used to draw the serrated portion 200 into the opening. The serrated portion 200 will prevent the bolt 194 from turning in the opening. After the nut has been tightened, the recessed head 197 will not protrude beyond the outer surface of the end piece 190, as shown in FIG. 3A.

As shown in FIG. 4, the porcelain-coated metal insert 192 has an extension 192a which extends between the handle 196 and sidewall 88 of housing 52. The extension acts as a heat shield to prevent the handle from overheating.

According to a further aspect of the invention, the gas grill also incorporates a novel tank-support means for a fuel tank 210, shown in FIG. 1. The details of the tank-support means are shown in FIGS. 9-11. The tank support means is located on one end of the cart 22 between the first pair of legs 32 so that the tank is supported directly above the wheels 34. The tank-support means consists of a first element 212 supported on a vertical member 213 that is located between the two legs 32 and a second element 214 which is movable relative to the first element or member 212. The first element 212 consists of a U-shaped bracket 220 including a base 219 and side walls 221 enclosing a top wall 220. The base 219 is connected by bolts 222 to the brace 213.

The second element 214 is pivotally supported on the first element by a pair of U-shaped members 224 each have one end pivoted on a pin 226 and each pin extends between the side walls 221 of the U-shaped bracket. The opposite ends of the support members or bars 224 are pivotally supported on pins 230, which are carried by the second element 214. A biasing spring 232 has one end connected to one of the pins or rods 230 and the opposite end is connected to a threaded coupling 234 carried by the top wall 221 of the first element 212.

The second element 214 also has a tank-support member 236 in the form of a hook 238 that is deformed from the element 214 and extends outwardly. The hook is adapted to be received into a slot 240 formed along the upper edge of the rim of the tank. A slidable clamp element 242 is held onto the element 214 by a wing nut 244 received on a threaded element 246 carried by the second element 214. Thus, the tank can be inserted over the hook and rest on the hook and the clamp can then be used to secure the tank to the movable second element for movement therewith. The support means also consists of a pair of anti-friction means or rollers 250 that are rotatably supported on opposite sides of the vertical brace 213, as is shown in FIG. 1 of the drawings.

The tank support means also incorporates an indicator arm 254 which has an inner end pivotally supported on the first element 212 and extends through a horizontal slot 256 defined in the second element 214. More specifically, as shown in Fig. 11 the inner end of arm 254 is connected to the base 219 of the U-shaped bracket 220 and the arm extends through a vertical slot 258 in one side wall 221. The outer end of the arm or indicator means has a scale 260 associated therewith and the position of the arm 254 with respect to the indicator 260 indicates the amount of fuel remaining within the tank. Thus, the tank moves the second element 214 to pivot the arm 254 while the horizontal slot acts as a fulcrum. By proper selection of the spring characteristics of the spring 232, a standard-sized portable tank 210 will give a fairly accurate indication of the amount of fuel within the tank on the guage 260.

Thus, the tank is supported in cantilevered fashion along the vertical brace 213 and rests or is forced up against the anti-friction means, which allows for better movement and control of the position of the tank through its weight, which is determined by the amount of fuel in the tank.

The spring characteristics are preferably such that the indicator arm remains in the "full" position until about 2/3 of the gas within the tank has been depleted. Thus, a more accurate indication of when the tank approaches complete depletion may be realized.

The cart 22 (FIG. 1) may also include cross braces 270 and a reinforcing center brace 272 on which removable article-supporting units 274 may be suspended.

As can be appreciated from the above description, the gas grill disclosed herein operates on an entirely new principal. The combination of tubular burners covered by inverted V-shaped sear bars and a deep removable grease collector unit with a small removable grease catcher pan at the lower end substantially eliminates the possibility of the grease in the collector unit from igniting. Furthermore, the sear bars can be quickly heated to a temperature sufficient for controlled flare-ups of the grease on the inclined surfaces to sear the meat being cooked. This is accomplished by ignition of all three tubular burners. After the meat, such as steaks, has been seared on both sides, the intermediate burner can be shut off and the sear bars' temperature will be reduced to a point where the grease thereon will not ignite, but will still vaporize to give the desired cooking flavor.

There is also a critical relationship between the spacing of the sear bars above the burner tubes. If the spacing is too great, the flavorizing bars will not be heated sufficient, and if the spacing is too small they will overheat. While the parameters of this spacing have not been fully explored, a spacing of about two inches, and more specifically 2-1/8 inches, between the lower edges of the flavorizing bars and the openings 126, 158 is provided for optimum heating of the bars. Also, the spacing between the lower edges of the sear bars is about 2-3/16 inches, which is significantly greater than the diameter of the burner tubes to insure that the burner tube is adequately protected. The height of the sear bar is about 1-3/8 inches so that the apex of the bar is located about 3-½ inches from the center of the burner tube.

The gas grill is designed for easy assembly without the use of any tools, and the arrangement of parts is such that minimum instructions are necessary.

While the invention has been particularly shown and described with reference to a preferred embodiment thereof, it will be understood by those skilled in the art that various changes in form and details may be made therein without departing from the scope of the invention as defined in the claims.

## Claims

1. A portable gas grill including a cart (22) supporting a housing (24) having a gas burner assembly (2) in the bottom and a food support grid (66) above the gas burner assembly (62) with gas emitting jets characterized by said cart (22) being of generally rectangular configuration and consisting of a plurality of tubular members (30) arranged to define an upper rectangular opening, said housing (24) having first and second opposed pairs of walls (80, 88) defining a chamber (56) having a cover (58), said chamber (56) having opposed outwardly-directed ledges (82) integral with said first pair of opposed walls (80), and a plurality of generally V-shaped sear bars (70) supported on said ledges (82), said sear bars (70) covering said gas burner assembly (62) and adapted to receive and vaporize grease drippings thereon and prevent uncontrolled flare-ups.

2. A portable gas grill as defined in claim 1, further characterized by said gas burner assembly (62) including first and second elongated burner tubes (114), each having a flattened end portion (116) with a slot (118) extending from a free end, said housing (24) having a pair of ledges (120) at opposed corners with abutments (122) on upper surfaces received into said slots (118) so that said burner tubes (114) can be assembled in a housing by manipulation of said tubes (114).

3. A portable gas grill as defined in claims 1 or 2, further characterized by a removable grease collector unit (90) defining the interior bottom wall for said chamber (56) with said chamber (56) having a lower edge located outside a peripheral rim of said collector unit (90), said housing (52) having an integral inwardly-directed lip (95) overlapping said peripheral rim (94) to direct grease into said collector unit (90).

4. A portable gas grill as defined in claim 3, in which said grease collector unit (90) includes inwardly-tapered walls leading to a lower opening (96), and further including a removable grease collector tray (98) below said opening (96).

5. A portable gas grill as defined in claims 1 through 4, further characterized by said cover (58) including two end pieces (190) and a center insert (192) with fastener means connecting said center insert (192) to respective end pieces (190), said fastener means including a bolt (194) having an enlarged head (197) with each end piece (190) having an enlarged recess (198) surrounding an opening (199) and in which said bolt (194) has gripping means (200) received into said opening (199) and preventing turning of said bolt (194) in said opening (199) with a nut (204) received on said bolt (194) and rotatable to draw said gripping means (200) into said opening (199).

6. A gas grill as defined in claims 1 through 5, further characterized by a second set of sear bars (70) extending transversely of said first set of sear bars (70).

7. A gas grill as defined in claims 1 through 6, further characterized by tank support means consisting of a scale having a first element (212) supported on said cart (22) and a second element (214) movable thereon with biasing means (232) between said elements (212, 214) and tank clamping means (238-246) on said second element (214) with anti-friction means (250) on said cart (22) to accommodate vertical movement of said tank (210) on said cart (22) as a function of the weight of said tank (210).

8. A gas grill as defined in claim 2, further characterized by a third burner unit (112) intermediate said two burner units (110) and a pilot tube (130) interconnecting said two burner units (110) adjacent said flattened portions (116), said third burner unit (112) having a free end (152) supported on said pilot tube (130) and in communication therewith so that one of said burners (110) may be ignited and the remaining burner units are ignited from said pilot tube (130).

9. A gas grill as defined in claim 8, in which said pilot tube (130) is open at opposite ends and said two burner units (110) have openings (132) receiving said opposite ends, said pilot tube (130) having a projection (154) intermediate opposite ends and said third burner unit (112) having a positioning slot (153) receiving said pilot tube (130) and said projection (154) so that said pilot tube (130) and burner units (110, 112) can be assembled within said housing (24) by manipulation of said tubes (114, 130, 150) without the use of any fastener means.

10. A gas grill as defined in claims 1 through 9, further including a separate removable burner unit (160) supported on said side members (40) outside said housing (24).

11. A gas grill as defined in claims 1 through 10, in which said housing (24) includes a cover (58) hinged to an upper edge of one wall (88), said cover (58) having a removable thermometer (180) supported thereon, said thermometer (180) including a piercing projection portion (182) extending through said cover (58) to sense the internal temperature of said housing (24), said thermometer (180) being removable from said cover (58) and insertable into food being cooked to sense the internal temperature of the food.

**Revendications**

1. Un gril à gaz comprenant un chariot (22) soutenant un logement (24) ayant un assemblage de brûleur à gaz (2) au niveau du fond et une grille de support de la nourriture (66) située au dessus de l'assemblage de brûleur à gaz (62) avec des buses d'émission de gaz, caractérisé en ce que ledit chariot (22) a une configuration généralement rectangulaire et en ce qu'il est composé d'une pluralité d'éléments tubulaires (30) disposés pour définir une ouverture rectangulaire supérieure, ledit logement (24) ayant des premières et des secondes paires de parois opposées (80, 88) définissant une chambre (56) ayant un couvercle (58), ladite chambre (56) ayant des épaulements opposés orientés vers l'extérieur (82) faisant partie intégrante de la première paire de parois opposées (80), et une pluralités de barres à feu en forme de V (70) soutenues par lesdits épaulements (82), lesdites barres à feu (70) recouvrant ledit assemblage de brûleur à gaz (62) et étant adaptées pour y recevoir et vaporiser la graisse et empêcher qu'elle ne s'enflamme de façon incontrôlée.

2. Un gril à gaz portable selon la revendication 1, caractérisé en outre par ledit assemblage de brûleur à gaz (62) comprenant des premiers et des seconds tubes de brûleur allongés (114), ayant chacun une partie d'extrémité aplatie (116) avec une fente (118) s'étendant à partir d'une extrémité libre, ledit logement (24) ayant une paire d'épaulements (120) aux coins opposés avec des butées (122) au niveau des surfaces supérieurs reçues dans lesdites fentes (118) afin que lesdits tubes de brûleur (114) puissent être assemblés dans un logement par une manipulation desdits tubes (114).

3. Un gril à gaz portable selon les revendications 1 ou 2, caractérisé en outre par un collecteur de graisse amovible (90) définissant la paroi de fond interne pour ladite chambre (56), ladite chambre (56) ayant un bord inférieur situé à l'extérieur d'un rebord périphérique dudit collecteur (90), ledit logement (52) ayant une languette intégrale orientée vers l'intérieur (95) chevauchant ledit rebord périphérique (94) pour diriger la graisse dans ledit collecteur (90).

4. Un gril à gaz portable selon la revendication 3, caractérisé en ce que ledit collecteur de graisse (90) comprend des parois allant en pointe vers le bas menant vers une ouverture inférieure (96), comprenant de plus un plateau de collecteur de graisse amovible (98) sous ladite ouverture (96).

5. Un gril à gaz portable selon l'une des revendications 1 à 4, caractérisé en outre par ledit couvercle (58) comprenant deux pièces d'extrémité (190) et une pièce rapportée centrale (192) avec des moyens d'attache reliant ladite pièce rapportée centrale (192) aux pièces d'extrémité respectives (190), lesdits moyens d'attache comprenant un boulon (194) ayant une tête agrandie (197) et chaque pièce d'extrémité (190) ayant un renfoncement agrandi (198) entourant une ouverture (199) et dans lequel ledit boulon (194) a des moyens de serrement (200) reçus dans ladite ouverture (199) et empêchant que ledit boulon (194) ne tourne dans ladite ouverture (199) avec un écrou (204) reçu sur ledit boulon (194) et rotatif pour tirer lesdits moyens de serrement (200) dans ladite ouverture (199).

6. Un gril à gaz selon l'une des revendications 1 à 5, caractérisé en outre par un second lot de barres à feu (70) s'étendant de façon transversale par rapport au premier lot de barres à feu (70).

7. Un gril à gaz selon l'une des revendications 1 à 6, caractérisé en outre par des moyens de soutien de réservoir composés d'une échelle ayant un premier élément (212) soutenu par ledit chariot (22) et un second élément (214) mobile sur celui-ci avec des moyens de décentrement (232) entre lesdits éléments (212, 214) et des moyens de serrage de réservoir (238, 246) sur ledit second élément (214) avec des moyens anti-friction (250) sur ledit chariot (22) pour permettre un mouvement vertical dudit réservoir (210) sur ledit chariot (22) suivant la masse dudit réservoir (210).

8. Un gril à gaz selon la revendication 2, caractérisé en outre par une troisième unité de brûleurs (112) entre lesdites deux unités de brûleurs (110) et un tube témoin (130) reliant lesdites deux unités de brûleur (110) adjacent auxdites parties aplaties (116), ladite troisième unité de brûleur (112) ayant une extrémité libre (152) soutenue par ledit tube témoin (130) et en communication avec celui-ci de telle sorte que l'un desdits brûleurs (110) puisse être allumé et que les unités de brûleur restantes soient allumées à partir dudit tube témoin (130).

9. Un gril à gaz selon la revendication 8, caractérisé en ce que ledit tube témoin (130) est ouvert aux extrémités opposées et lesdites deux unités de brûleur (110) ont des ouvertures (132) recevant lesdites extrémités opposées ledit tube témoin (130) ayant une projection (154) située entre les extrémités opposées et ladite troisième unité de brûleur (112) ayant une fente de positionnement (153) recevant ledit tube témoin (130) et ladite projection (154) afin que ledit tube témoin (130) et les unités de brûleur (110, 112) puissent être assemblés dans ledit logement (24) en manipulant lesdits tubes (114, 130, 150) sans utiliser de moyens de serrement.

10. Un gril à gaz selon l'une des revendications 1 à 9, comprenant de plus une unité de brûleur amovible distincte (160) soutenue par lesdits éléments latéraux (40) à l'extérieur dudit logement (24).

11. Un gril à gaz selon l'une des revendications 1 à 10, caractérisé en ce que ledit logement (24) comprend un couvercle (58) monté sur charnières sur un bord supérieur d'une paroi (88), ledit couvercle (58) ayant un thermomètre amovible (180) soutenu sur celui celui-ci, ledit thermomètre (180) comprenant une partie de projection de percement (182) s'étendant au travers dudit couvercle (58) pour capter la température interne dudit logement (24), ledit thermomètre (180) pouvant être enlevé dudit couvercle (58) et inséré dans la nourriture en train d'être cuite pour capter la température interne de la nourriture.

## Patentansprüche

1. Tragbarer Gasgrill, umfassend einen Wagen (22), der ein Gehäuse (24) mit einer Gasbrenneranordnung (2) in dem Boden und ein Nahrungsmitteltragrost (66) oberhalb der Gasbrenneranordnung (62) mit Gasauslaßdüsen trägt, dadurch gekennzeichnet, daß der Wagen (22) eine im allgemeinen rechtwinklige Form hat und aus mehreren Rohrteilen (30) besteht, die eine obere rechtwinklige Öffnung bilden, wobei das Gehäuse (24) erste und zweite sich gegenüberliegende Paare von Wänden (80, 88) aufweist, die eine Kammer (56) mit einem Deckel (58) bilden, und daß die Kammer (56) sich gegenüberliegende, nach außen gerichtete Leisten (82) aufweist, die mit dem ersten Paar sich gegenüberliegender Wände (80) einheitlich ausgebildet sind, und daß eine Mehrzahl von im allgemeinen V-förmigen Heizstäben (70) vorgesehen ist, die auf den Leisten (82) abgestützt ist, wobei die Heizstäbe (70) die Gasbrenneranordnung (62) überdecken und dazu dienen, Fetttropfen aufzunehmen und zu verdampfen sowie unkontrollierte Flammenbildungen zu verhindern.

2. Tragbarer Gasgrill nach Anspruch 1, dadurch gekennzeichnet, daß die Gasbrenneranordnung (62) erste und zweite, sich längs erstreckende Brennerrohre (114) umfaßt, von denen jedes einen abgeflachten Endteil (116) mit einem Schlitz (118) aufweist, der sich von einem freien Ende erstreckt, daß das Gehäuse (24) ein Paar Leisten (120) an gegenüberliegenden Ekken mit Widerlagern (122) an den Oberseiten aufweist, welche von den Schlitzen (118) aufgenommen werden, so daß die Brennerrohre (114) durch Handhabung der Rohre (114) in einem Gehäuse angeordnet werden können.

3. Tragbarer Gasgrill nach Anspruch 1 oder 2, dadurch gekennzeichnet, daß eine abnehmbare Fettsammeleinheit (90) die innere Bodenwand für die Kammer (56) bildet, wobei die Kammer (56) eine Unterkante aufweist, die außerhalb eines Umfangsrandes der Sammeleinheit (90) angeordnet ist, und daß das Gehäuse (52) mit einer einheitlichen, nach innen gerichteten Lippe (95) versehen ist, die den Umfangsrand (94) überlappt, um Fett in die Sammeleinheit (90) zu leiten.

4. Tragbarer Gasgrill nach Anspruch 3, bei dem die Fettsammeleinheit (90) nach innen geneigte Wände aufweist, die zu einer unteren Öffnung (96) führen, und ferner eine abnehmbare Fettsammelschale (98) unterhalb der Öffnung (96) umfaßt.

5. Tragbarer Gasgrill nach den Ansprüchen 1 bis 4, dadurch gekennzeichnet, daß der Deckel (58) zwei Endteile (190) und einen mittleren Einsatz (192) umfaßt, wobei Befestigungsmittel den mittleren Einsatz (192) mit entsprechenden Endteilen (190) verbinden und die Befestigungsmittel einen Bolzen (194) mit einem vergrößerten Kopf (197) umfassen, wobei jeder Endteil (190) mit einer vergrößerten Ausnehmung (198) versehen ist, die eine Öffnung (199) umgibt, und bei der der Bolzen (194) eine Greifvorrichtung (200) aufweist, die in die Öffnung (199) eingreift und eine Drehung des Bolzens (194) in der Öffnung (199) verhindert, wobei eine Mutter (204) von dem Bolzen (194) aufgenommen wird und drehbar ist, um die Greifvorrichtung (200) in die Öffnung (199) hineinzuziehen.

6. Gasgrill nach den Ansprüchen 1 bis 5, dadurch gekennzeichnet, daß eine zweite Gruppe von Heizstäben (70) sich quer zu der ersten Gruppe von Heizstäben (70) erstreckt.

7. Gasgrill nach den Ansprüchen 1 bis 6, gekennzeichnet durch eine Tank-Tragvorrichtung, die aus einer Meßvorrichtung mit einem ersten Element (212) besteht, das auf dem Wagen (22) abgestützt ist, sowie einem zweiten Element (214), das darauf bewegbar ist, wobei eine Vorspannvorrichtung (232) zwischen den Elementen (212, 214) vorgesehen ist und eine Tank-Klemmvorrichtung (238-246) auf dem zweiten Element (214) mit einer Anti-Friktionsvorrichtung (250) auf dem Wagen (22) vorgesehen ist, um eine Anpassung der senkrechten Bewegung des Tanks (210) auf dem Wagen (22) als Funktion des Gewichtes des Tanks (210) zu ermöglichen.

8. Gasgrill nach Anspruch 2, gekennzeichnet durch eine dritte Brennereinheit (112) zwischen den beiden Brennereinheiten (110) und einem Pilotrohr (130), das die beiden Brennereinheiten (110) in der Nähe der abgeflachten Teile (116) verbindet, wobei die dritte Brennereinheit (112) mit einem freien Ende (152) versehen ist, das auf dem Pilotrohr (130) abgestützt ist und mit diesem in Verbindung steht, so daß einer der Brenner (110) und die übrigen Brennereinheiten von dem Pilotrohr (130) entzündbar sind.

9. Gasgrill nach Anspruch 8, bei dem das Pilotrohr (130) an gegenüberliegenden Enden offen ist und die beiden Brennereinheiten (110) Öffnungen (132) zur Aufnahme der gegenüberliegenden Enden aufweisen, wobei das Pilotrohr (130) mit einem Vorsprung (154) zwischen gegenüberliegenden Enden versehen ist und die dritte Brennereinheit (112) mit einem Positionierschlitz (153) zur Aufnahme des Pilotrohres (130) und des Vorsprungs (154) versehen ist, so daß das Pilotrohr (130) und die Brennereinheiten (110, 112) innerhalb des Gehäuses (24) durch Handhabung der Rohre (114, 130, 150) ohne Verwendung irgendwelcher Befestigungsmittel zusammengesetzt werden können.

10. Gasgrill nach den Ansprüchen 1 bis 9, umfassend eine getrennte, wegnehmbare Brennereinheit (160), die auf den Seitenteilen (40) außerhalb des Gehäuses (24) abgestützt ist.

11. Gasgrill nach den Ansprüchen 1 bis 10, bei dem das Gehäuse (24) einen Deckel (58) umfaßt, der an einer Oberkante einer Wand (88) scharnierartig angelenkt ist, wobei der Deckel (58) ein abnehmbares Thermometer (180) aufweist, das von dem Deckel getragen wird, wobei das Thermometer (180) einen vorspringenden Einstechteil (182) aufweist, der sich durch den Deckel (58) erstreckt, um die Innentemperatur des Gehäuses (24) abzufühlen, wobei das Thermometer (180) aus dem Deckel (58) herausnehmbar und in das zu bratende Nahrungsmittel einsetzbar ist, um die Innentemperatur des Nahrungsmittels abzufühlen.

_Fig_1_

_Fig_2_

EP 0 233 187 B1

*FIG. 3*

*FIG. 3A*

Fig. 5.

Fig. 4.

FIG-6-

_Fig_7_

_Fig_8_

FIG-9-

213
212
234
221
214
10
256
254
260

FIG-11-

212
221
258
214 219

FIG-10-

220
234
221
230
222
214
219
244
216
246
232
242
224
238
226
236

FIG_12_

FIG_13_

FIG_14_